(19) Europäisches Patentamt
European Patent Office
Office européen des brevets

(11) EP 1 902 330 B1

(12) EUROPÄISCHE PATENTSCHRIFT

(45) Veröffentlichungstag und Bekanntmachung des Hinweises auf die Patenterteilung:
**08.09.2010 Patentblatt 2010/36**

(21) Anmeldenummer: **06754433.8**

(22) Anmeldetag: **19.06.2006**

(51) Int Cl.:
***G01S 15/60*** *(2006.01)*

(86) Internationale Anmeldenummer:
**PCT/EP2006/005846**

(87) Internationale Veröffentlichungsnummer:
**WO 2007/006397 (18.01.2007 Gazette 2007/03)**

(54) **VORRICHTUNG ZUM BESTIMMEN DER EIGENGESCHWINDIGKEIT EINES WASSERFAHRZEUGS**

APPARATUS FOR DETERMINING THE INTRINSIC SPEED OF A WATERCRAFT

PROCEDE POUR DETERMINER LA VITESSE PROPRE D'UN BATEAU

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **08.07.2005 DE 102005031973**

(43) Veröffentlichungstag der Anmeldung:
**26.03.2008 Patentblatt 2008/13**

(73) Patentinhaber: **ATLAS ELEKTRONIK GMBH**
**28305 Bremen (DE)**

(72) Erfinder: **THEUERKAUF, Nils**
**26122 Oldenburg (DE)**

(74) Vertreter: **Wasiljeff, Johannes M.B.**
**Jabbusch Siekmann & Wasiljeff**
**Patentanwälte**
**Otto-Lilienthal-Strasse 25**
**28199 Bremen (DE)**

(56) Entgegenhaltungen:
**DE-A1- 3 021 449**
**DE-B1- 1 798 276**
**US-A- 5 694 372**
**US-A- 5 950 291**
**US-A1- 2003 076 742**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 902 330 B1

## Beschreibung

Die Erfindung betrifft eine Vorrichtung zum Bestimmen der Eigengeschwindigkeit eines Wasserfahrzeugs durch Dopplermessung der im Oberbegriff des Anspruchs 1 definierten Gattung.

Bei solchen sog. Dopplerlogs wird Schallenergie mit der Sendefrequenz $f_S$ unter einem Neigungswinkel $\alpha$ zur Bewegungsebene des Wasserfahrzeugs ausgesendet, vom Meeresboden oder vom Wasser reflektiert und die reflektierten Anteile der Schallenergie wieder empfangen, deren Frequenz gegenüber der Sendefrequenz $f_S$ um die sog. Dopplerfrequenzverschiebung $f_D$ verschoben ist. Aus der Dopplerfrequenzverschiebung $f_D$ wird die Geschwindigkeit v des Fahrzeugs gemäß

$$f_D = 2\frac{v}{c} \cdot f_s \cdot \cos\alpha$$

bestimmt, wobei c die Schallgeschwindigkeit im Wasser ist. Wird der Neigungswinkel $\alpha$ der Sende- und Empfangsrichtung, die üblicherweise als Hauptrichtung der Antenne bezeichnet wird, durch phasenverschobene Ansteuerung der einzelnen Wandler eingestellt, so ist die gemessene Dopplerfrequenzverschiebung unabhängig von der Schallgeschwindigkeit c und der Einbau der Antenne im Wasserfahrzeug wird einfacher, da die Antenne als Flachantenne ausgeführt werden kann, die parallel zur Bewegungsebene des Wasserfahrzeugs ausgerichtet wird.

Bei einem bekannten Dopplerlog (DE 1 798 276 C1) sind die Wandler der Antenne auf parallelebetriebene Gruppen aufgeteilt, wobei die Wandler jeder Gruppe mit einem Drehfeld aus einem Mehrphasengenerator gespeist werden, dessen Drehfeld mit der Sendefrequenz $f_S$ periodisch umläuft. Die Drehrichtung des Drehfeldes bestimmt, ob die gegenüber der Bewegungsebene des Wasserfahrzeugs geneigte Hauptrichtung der Antenne in Schiffsvoraus oder nach Schiffsachtern gerichtet ist. Durch den Antennenaufbau, d.h. den Abstand der gleichphasig betriebene Wandler voneinander, und den gewünschten Neigungswinkel $\alpha$ der Hauptrichtung der Antenne, der üblicherweise zwischen 45° und 60° liegt, ist die Sendefrequenz $f_S$ unabänderlich festgelegt.

Ein bekanntes Dopplerlog (US 5 694 372) weist eine Gesamtheit von auf einer am Rumpf eines Trägerschiffes befestigten ebenen Fläche angeordneten Wandlern und Mittel zur Versorgung dieser Wandler mit Signalen auf, die eine erste und eine zweite Frequenz, die voneinander verschieden sind und aufeinanderfolgen, sowie unterschiedliche Phasen besitzen. Die Wandler sind in Reihen angeordnet und in zwei Gruppen so unterteilt, dass jeder zweite Wandler zu einer der beiden Gruppen gehört. Die Wandler der einen Gruppe werden wechselweise mit einem Signal und einem um 180° phasenverschobenen Signal und die Wandler der anderen Gruppe mit einem um 90° und um minus 90° phasenverschobenen Signal angesteuert. Die an den in der Reihenfolge aufeinanderfolgenden Wandlern liegenden Signale haben in einer ersten Folge eine erste Frequenz und in einer zweiten Folge eine davon verschiedene zweite Frequenz. Dadurch werden zwei Sendekeulen erhalten, die um den gleichen Winkel gegen die Normale auf der die Wandler tragenden ebenen Fläche in entgegensetzter Richtung geneigt sind.

Ein bekanntes akustisches Geschwindigkeitsmesssystem (US 2003/0076742 A1) weist eine mit niedriger Frequenz und eine mit hoher Frequenz betriebene Wandleranordnung mit jeweils einer Vielzahl von elektroakustischen Wandlern auf. Die beiden Wandleranordnungen sind in einem gemeinsamen Gehäuse untergebracht und wahlweise zur Geschwindigkeitsmessung aktivierbar, so dass wahlweise mit einer hohen oder einer niedrigen Frequenz gesendet werden kann.

Der Erfindung liegt die Aufgabe zugrunde, eine Vorrichtung der eingangs genannten Art so zu verbessern, dass ihr Einsatzbereich sowohl bezüglich der Gewässerart und der Gewässerbedingungen als auch der Fahrzeugart vergrößert wird und sie bei jedem Anwendungsfall eine präzise Geschwindigkeitsmessung gewährleistet.

Die Aufgabe ist erfindungsgemäß durch die Merkmale im Anspruch 1 gelöst.

Die erfindungsgemäße Vorrichtung hat den Vorteil, dass die Dopplermessung nicht mit einer fest vorgegebenen Arbeitsfrequenz durchgeführt werden muss und damit der Arbeitsbereich der Vorrichtung unveränderlich festliegt, sondern der Arbeitsbereich durch Auswahl einer anderen Sendefrequenz an die jeweils herrschenden Verhältnisse angepasst werden kann. So kann im Flachwasser auf eine hohe Sendefrequenz umgeschaltet werden, die eine präzise Dopplermessung auch im Flachwasser erlaubt. In tieferen Gewässern kann durch Umschaltung auf eine tiefe Sendefrequenz aufgrund der geringeren Dämpfung der Schallwellen eine ausreichend große Messtiefe erreicht werden. Insgesamt lässt sich durch die Möglichkeit der Umschaltung auf unterschiedliche Sendefrequenzen ein Operationsbereich der Vorrichtung von einem bis einigen hundert Metern erreichen und damit Präzisionsmessungen im flachen Gewässer bis zu tiefen Gewässern ausführen. In allen Fällen bleibt der Neigungswinkel der Hauptrichtung der Antenne gegenüber der Bewegungsebene des Wasserfahrzeugs unverändert.

Wegen dieser Flexibilität ihres Arbeitsbereiches kann die erfindungsgemäße Vorrichtung bei gleich guten Messergebnissen sowohl in Überwasserschiffen als auch in U-Booten und autonom operierenden Unterwasserfahrzeugen kleiner Bauform, sog. AUVs oder Drohnen, die häufig mit relativ geringem Abstand vom Meeresboden fahren, eingesetzt werden. In vielen Wasserfahrzeugen werden Dopplerlogs üblicherweise parallel zu weiteren, im Wasserfahrzeug installierten elektroakustischen Sende- und Empfangseinrichtungen, wie Sonaranlagen, betrieben. Durch die Möglichkeit der Umschaltung der Sendefrequenz des Dopplerlogs kann ein frequenzbedingter Konflikt zwischen dem Sende- und/oder Empfangsbetrieb der Sonaranlagen und dem Dopplerlog vermieden und alle unterbrechungslos parallel betrieben werden. Mittels der breitbandigen Wandler können aber auch Schallwellen mit unterschiedlichen Sendefrequenzen gleichzeitig abgestrahlt werden, wenn dies in bestimmten Applikationen erforderlich sein sollte.

Zweckmäßige Ausführungsformen der erfindungsgemäßen Vorrichtung mit vorteilhaften Weiterbildungen und Ausgestaltungen der Erfindung ergeben sich aus den weiteren Ansprüchen.

Gemäß einer vorteilhaften Ausführungsform der Erfindung sind die gleichphasig angesteuerten Wandler in den verschiedenen Gruppen jeweils an einem gemeinsamen Leistungsverstärker angeschlossen, d.h. mit den Leistungsverstärkern fest verdrahtet. Unabhängig von der Umschaltung der Sendefrequenz sind damit nur soviel Leistungsverstärker erforderlich, wie parallelbetriebene Gruppen von Wandlern in der Antenne vorhanden sind. Gegenüber herkömmlichen Dopplerlogs ist damit trotz der Möglichkeit der Sendefrequenzumschaltung und der Mehrfachabstrahlung von Sendefrequenzen nur ein geringer Aufwand an Leistungsverstärkern nötig.

Gemäß einer vorteilhaften Ausführungsform der Erfindung sind die Wandler aus einem piezoelektrischen Verbundwerkstoff, sog. Composite, hergestellt, bei dem eine Vielzahl von Keramikelementen in einem Polymer eingebettet ist, die stirnseitig von metallischen Flächen kontaktiert sind. Aus diesem Verbundwerkstoff kann die Antenne kostengünstig hergestellt werden, da zur Bildung ihrer Wandler lediglich die Wandlerelektroden aus den metallischen Flächen geätzt werden müssen. Die so gewonnene Antenne besitzt eine Sende- und Empfangscharakteristik, die eine große Frequenzbandbreite und hohe Sendeleistung und Empfangsempfindlichkeit bei geringen Nebenpegeln aufweist.

Gemäß einer bevorzugten Ausführungsform der Erfindung wird zur Ausbildung mindestens einer Antenne ein Sektor in einer Platte aus Verbundwerkstoff mit metallischen Oberflächen vorgesehen und die Wandler der Antenne durch Ätzen der metallischen Oberflächen der Platte in der Weise gebildet, dass rechteckige, streifenförmige Elektroden mit einer großen Streifenlänge und einer kleineren Streifenbreite entstehen, die unter Spaltbelassung in Streifenbreite gesehen aneinandergereiht sind. Die Streifenlänge ist dabei rechtwinklig zu der Projektionslinie der gewünschten Hauptrichtung der Antenne auf die Plattenebene ausgerichtet.

Gemäß einer bevorzugten Ausführungsform der Erfindung sind auf der Platte insgesamt vier, jeweils eine Antenne bildende Sektoren vorgesehen, die um 90° Umfangswinkel gegeneinander versetzt sind. Die Ausrichtung der Längskanten der streifenförmigen Elektrodenflächen in den vier verschiedenen Sektoren ist damit ebenfalls um 90° Umfangswinkel versetzt, so dass in jeweils zwei einander gegenüberliegenden Sektoren die Streifenlänge, also die Längskanten der Elektroden parallel zueinander verlaufen. Ein solcher Aufbau ermöglicht das gleichzeitige Senden und Empfangen von Schallwellen in vier um 90° gegeneinander versetzte Hauptrichtungen. Wenn die Platte, gemäß einer vorteilhaften Ausführungsform der Erfindung am Fahrzeug so angeordnet ist, dass die vier Hauptrichtungen in Voraus, Achtern, Backbord und Steuerbord des Wasserfahrzeugs weisen, so wird eine kostengünstig herstellbare Antennenkonfiguration für ein nach dem bekannten "Janusprinzip" arbeitendes Dopplerlog erreicht. Wegen der Umschaltmöglichkeit der Sendefrequenzen können alle vier Antennen wahlweise mit derselben Sendefrequenz oder mit jeweils einer anderen der zur Verfügung stehenden Sendefrequenzen betrieben werden. Im letzteren Fall werden vorzugsweise Antennen zum Senden sequentiell angesteuert und dann auf zeitgleichen Empfang umgeschaltet. Durch die Verwendung unterschiedlicher Sendefrequenzen wird ein gegenseitiges "Übersprechen" der Antennen zuverlässig verhindert.

Das aufeinanderfolgende Ansteuern der einzelnen Antennen im Sendefall hat den Vorteil, dass nicht für alle Antennen jeweils ein Satz von Leistungsverstärkern eingesetzt werden muss, sondern derselbe Satz von Leistungsverstärkern mittels entsprechender Schaltelemente auf alle vier Antennen aufgeschaltet werden kann. Da Leistungsverstärker für den Sendebetrieb teure Baukomponenten sind, wirkt sich die Reduktion der Zahl der Leistungsverstärker, hier um den Faktor vier, sehr deutlich auf die Senkung der Gesamtkosten aus.

Das Realisieren von vier getrennten Antennen auf derselben Verbundwerkstoff-Platte lässt sich kostengünstig in einem nasschemischen Prozess erreichen und führt zu einer Antennenkonfiguration nach dem Janus-Prinzip mit kleiner Bauform. Selbstverständlich ist es möglich, eine von vier abweichende Anzahl von Antennen auf der Platte auszubilden, wobei der Versatzwinkel der Antennen in Umfangsrichtung von der Zahl der Antennen bestimmt ist.

Gemäß einer vorteilhaften Ausführungsform der Erfindung sind die Antennen in allen Sektoren der Platte gleich aufgebaut. Die streifenförmige Elektrode mit der größten Streifenlänge, d.h. größten Längskante ist mittig angeordnet. Aufeinanderfolgende Elektroden sind ausgehend von der mittleren Elektrode bis hin zu den beiden äußeren Elektroden symmetrisch abgestuft. Dadurch erhält man auf konstruktive Weise ein sog. mechanisches Shading zur Unterdrückung von Nebenpegeln, d.h. eine variable akustische Leistungsabgabe der Wandler, die von der Mitte der Antenne zum Rand hin abfällt. Die Abstufung der Streifenlänge einzelnen Elektroden wird entsprechend dem gewünschten Shading gewählt.

Um auch quer zur Hauptrichtung auftretende Nebenpegel zu reduzieren, sind gemäß einer vorteilhaften Ausführungsform der Erfindung die einzelnen Sektoren in Richtung der Streifenlänge der Elektroden konkav gekrümmt.

Dadurch erhält die mit vier Sektoren belegte Platte aus Verbundwerkstoff in etwa die Form eines Hohlspiegels. Da der Einfluss der Krümmung auf die Nebenpegel frequenzabhängig ist, muss eine für alle einstellbaren Sendefrequenzen optimierte Krümmung gewählt werden.

Die Erfindung ist anhand eines in der Zeichnung dargestellten Ausführungsbeispiels im folgenden näher beschrieben. Es zeigen:

Fig. 1 ausschnittweise eine Seitenansicht eines Überwasserschiffes mit einem Dopplerlog, schematisiert dargestellt,

Fig. 2 eine Draufsicht der Antennenkonfiguration des Dopplerlogs in Fig. 1,

Fig. 3 ausschnittweise einen Schnitt längs der Linie III - III in Fig. 2, schematisiert dargestellt,

Fig. 4 einen Schnitt längs der Linie IV - IV in Fig. 2, schematisiert dargestellt,

Fig. 5 ausschnittweise eine schematische Darstellung der festen Verdrahtung der Wandler einer Antenne mit Leistungsverstärkern in der Antennenkonfiguration gemäß Fig. 2,

Fig. 6 eine Tabelle für die phasenverschobene Ansteuerung der Wandler der Antenne in Fig. 5,

Fig. 7 eine Tabelle für die phasenverschobene Ansteuerung der Wandler einer modifizierten Antenne mit zwölf Wandlern pro Wandlergruppe.

Das in Fig. 1 ausschnittweise und schematisierte dargestellte Überwasserschiff als Ausführungsbeispiel für ein allgemeines Wasserfahrzeug ist mit einem Dopplerlog ausgestattet, mit dem die Eigengeschwindigkeit des Überwasserschiffes über Grund oder durch Wasser gemessen wird. Das nach dem sog. Janusprinzip arbeitende Dopplerlog weist eine in Fig. 2 in Draufsicht dargestellte Antennenkonfiguration 11 auf, die am Boden des Schiffsrumpfs mit parallel zur Bewegungsrichtung des Überwasserschiffes ausgerichteter Antennenebene befestigt ist. Die Antennenkonfiguration 11 umfasst vier Antennen 111, 112, 113 und 114, die um 90° gegeneinander gedreht angeordnet sind. Jede Antenne 111 bis 114 besitzt eine Richtcharakteristik mit einer Hauptrichtung 12 zum Senden und Empfangen von Schallwellen, auch als Hauptkeule der Richtcharakteristik bezeichnet, die um einen Neigungswinkel $\alpha$ gegen die Antennenebene geneigt ist, wobei die Hauptrichtung 12 der Antenne 111 nach Voraus, die Hauptrichtung 12 der Antenne 112 nach Achtern, die Hauptrichtung 12 der Antenne 113 nach Backbord und die Hauptrichtung 12 der Antenne 114 nach Steuerbord weist. Die vier Antennen 111 bis 114 sind dann erforderlich wenn man gleichzeitig in allen vier Richtungen senden will. Verzichtet man darauf, so reichen zwei der vier Antennen 111, die rechtwinklig zueinander ausgerichtet sind, z.B. die in Fig. 2 obere und rechte Antenne 111, da deren Hauptrichtungen 12 durch Ändern der Phasenansteuerung der Wandler 13 nach Steuerbord bzw. Achtern geschwenkt werden kann. Allerdings sind dann elektronische Schaltmittel erforderlich, um die Phasenumschaltung durchzuführen. Jede Antenne 111 bis 114 besitzt eine Vielzahl von elektroakustischen Wandlern 13, die äquidistant aneinandergereiht sind und z.B. von einem Mehrphasengenerator phasenverschoben mit einer Sendefrequenz angesteuert werden. Die Wandler 13 der Antennen 111 und 112 und die Wandler 13 der Antennen 113 und 114 werden jeweils mit gleichen Phasenverschiebungen jedoch gegenphasig angesteuert. Der Abstrahlwinkel $\alpha$, also der Neigungswinkel $\alpha$ der Hauptrichtung 12 gegen die Antennenebene, ist durch den Abstand d zwischen den Wandlern 13 und der Wellenlänge $\lambda$ der Sendefrequenz festgelegt.

Jede der vier gleich konfigurierten Antennen 111 bis 114 ist in einem Sektor einer Platte 18 aus einem piezoelektrischen Verbundwerkstoff, sog. Composite, ausgebildet. Piezoelektrische Verbundwerkstoffe und ihre Herstellung sind bekannt und beispielsweise in der DE 30 21 449 A1 oder US 5 950 291 beschrieben. Die Platte 18 weist eine Vielzahl von voneinander beabstandeten, keramischen Keramikelementen 14 aus einer piezoelektrischen oder elektrostriktiven Keramik auf, die in einem Polymer 15 eingebettet und stirnseitig von einer auf der Oberseite und einer auf der Unterseite der Platte 18 aufgebracht, metallischen Fläche kontaktiert sind. In den Schnittdarstellungen gemäß Fig. 3 und 4 ist der Aufbau der Platte 18 aus Verbundwerkstoff zu erkennen, wobei Fig. 3 einen Schnitt III - III gemäß Fig. 2 und Fig. 4 einen Schnitt IV - IV gemäß Fig. 2 der Antenne 111 zeigt. Die säulenartigen Keramikelemente 14 sind senkrecht zur Plattenebene polarisiert, vorzugsweise matrixartig in Reihen und Spalten angeordnet und gegeneinander durch das Polymer 15 isoliert. Durch Ätzen der metallischen Flächen auf der Ober- und/oder Unterseite der Platte 18 entstehen Elektroden 16, 17, die mehrere Keramikelemente 14 jeweils zu einem Wandler 13 zusammenfassen. Im dargestellten Ausführungsbeispiel weist, wie aus Fig. 3 und 4 zu erkennen ist, jeder Wandler 13 zwei nebeneinander angeordnete Keramikelemente 14 (Fig. 3) und eine unterschiedliche Anzahl von quer dazu angeordneten Keramikelementen 14 (Fig. 4) auf. Das Ätzen erfolgt in der Weise, dass streifenförmige, rechteckige Elektroden 16, 17 mit einer großen Streifenlänge und einer kleineren Streifenbreite entstehen, die unter Belassung eines Spaltabstandes mit ihren Längskanten aneinandergereiht sind. Die Längskanten sind dabei rechtwinklig zu der Projektionslinie der Hauptrichtung 12 der Antenne 111 auf die Platte 18 ausgerichtet. In dem in Fig. 3 und 4 dargestellten Ausführungsbeispiel sind streifenförmige Elektroden 16, 17 auf beiden Seiten der Platte 18 aus der metallischen Fläche in gleicher Ausbildung herausgeätzt. Es ist jedoch ausreichend, die streifenförmigen Elektroden 16 oder 17 aus einer der beiden metallischen Flächen der Platte 18 herauszuarbeiten.

Im Ausführungsbeispiel der Fig. 2 besteht jede Antenne 111 bis 114 aus insgesamt vierundzwanzig in Hauptrichtung 12 der Antennen 111 bis 114 im Abstand d (Fig. 5) angeordneten Wandlern 13, die durch die streifenförmige Ausbildung der Elektroden 16, 17 von den vorstehend beschriebenen Keramikelementen 14 gebildet sind. Wie in Fig. 2 zu erkennen ist, ist die Länge der streifenförmigen Elektroden 16, 17 bei aufeinanderfolgenden Wandlern 13 von den beiden mittleren Wandlern 13 ausgehend bis hin zu den beiden äußeren Wandlern 13 symmetrisch abgestuft, so dass die Wandler 13 eine unterschiedliche Anzahl von Keramikelementen 14 besitzen. Durch diesen mechanischen Aufbau der Wandler 13 wird eine akustische Leistungsabgabe der Antenne erzielt, die von der Mitte zum Rand hin abfällt und als sog. Shading bezeichnet wird. Durch dieses mechanische Shading werden unvermeidliche Nebenpegel oder Nebenkeulen der Richtcharakteristik der Antennen 111 bis 114, die nicht in Hauptrichtung 12 weisen, für einen störungsfreien Betrieb weitgehend unterdrückt.

Die Gesamtzahl der Wandler 13 einer jeden Antenne 111 bis 114 ist auf Gruppen 20 mit gleicher Wandlerzahl, d.h. mit gleicher Anzahl von Wandlern 13, aufgeteilt (Fig. 5), wobei die Wandler 13 einer Gruppe 20 phasenverschoben über Leistungsverstärker 19 angesteuert werden. Alle Gruppen 20 werden parallel betrieben, so dass in jeder Gruppe 20 die Wandler 13 mit denselben Phasenverschiebungen gespeist werden. In dem beschriebenen Ausführungsbeispiel der Antennen 111 bis 114 mit vierundzwanzig Wandlern 13 sind beispielhaft, wie dies in Fig. 5 ausschnittweise dargestellt ist, die Wandler 13 auf vier Gruppen 20 zu je sechs Wandlern 13 aufgeteilt, die in Fig. 5 in jeder Gruppe 20 mit Nr. 1 bis Nr. 6 durchnumeriert sind. Die in jeder Gruppe 20 phasengleich angesteuerten Wandler 13 sind mit jeweils einem Leistungsverstärker 19 fest verdrahtet. Die Wandlerzahl in den parallelbetriebenen Gruppen 20 ist mit sechs so gewählt, dass sich innerhalb der Gruppen 20 jeweils eine Anzahl Untergruppen 21, hier zwei, mit gleich vielen Wandlern 13, hier drei, bilden lassen.

Die Antennen 111 bis 114 sind schaltungstechnisch so konfiguriert, dass Schallwellen mit unterschiedlichen Sendefrequenzen abgestrahlt werden können, was durch die Breitbandigkeit der Wandler 13, die durch den vorstehend beschriebenen konstruktiven Aufbau der Wandler 13 erzielt wird, ohne Leistungseinbuße möglich ist. Wie eingangs erwähnt, besteht zwischen dem Wandlerabstand d der Wandler 13, dem Neigungswinkel $\alpha$ der Hauptrichtung 12 und der Wellenlänge $\lambda$ der Sendefrequenz $f_s$ ein fester Zusammenhang gemäß der bekannten Gleichung

$$\cos\alpha = \frac{\varphi \cdot \lambda}{2\pi \cdot d} \quad \text{mit} \quad \lambda = \frac{c}{f_s},$$

wobei $\varphi$ die Phasenverschiebung und c die Schallgeschwindigkeit im Wasser ist. Der Wandlerabstand d liegt fest und der Neigungswinkel $\alpha$ der Hauptrichtung 12 der Antennen 111 bis 114 muss beibehalten werden. Deshalb sind die Wandler 13 innerhalb der Gruppen 20 zu mindestens zwei parallel betreibbaren Untergruppen 21 mit gleich vielen Wandlern 13 aufgeteilt. Jede parallel betriebene Untergruppe 21 wird schaltungstechnisch mit den gleichen Leistungsverstärkern 19 verbunden, die mit den gleichen für jede Sendefrequenz $f_s$ festgelegten Phasenverschiebungen, angesteuert werden. Während die Wandler 13 der parallelbetriebenen Gruppen 20 mit der Sendefrequenz $f_S$, welcher der tiefsten Sendefrequenz entspricht, beaufschlagt werden, werden die Wandler 13 der parallel betriebenen Untergruppen 21 mit einer zweiten Sendefrequenz angesteuert, die ein ganzzahliges Vielfaches der tiefsten Sendefrequenz $f_S$ ist. Das ganzzahlige Vielfache ist bestimmt durch die Anzahl der parallelbetriebenen Untergruppen 21. Bei einer Ansteuerung mit der zweiten Sendefrequenz muss entsprechend der verringerten Anzahl der phasenverschoben angesteuerten Wandler 13 in einer Untergruppe 21 deren Phasenansteuerung gegenüber der Phasenansteuerung der mit der tiefsten Sendefrequenz $f_S$ betriebenen Wandler 13 der Gruppen 20 entsprechend dem Vielfachen geändert werden. In dem beschriebenen Beispiel mit vier Gruppen 20 à sechs Wandler 13 wird eine Aufteilung der sechs Wandler 13 in jeder Gruppe 20 in zwei Untergruppen 21 à drei Wandler vorgenommen. Wie die Tabelle in Fig. 6 zeigt, werden die sechs Wandler 13 einer Gruppe 20 mit der Sendefrequenz $f_S$ beaufschlagt, wobei die Wandler Nr. 1 bis 6 jeweils um 60° gegeneinander phasenverschoben gespeist werden. Dies ist in Fig. 5 schaltungstechnisch dargestellt. Die mögliche zweite Sendefrequenz beträgt aufgrund der gebildeten zwei Untergruppen 21 in jeder Gruppe 20 nunmehr $2f_s$. Für das Betreiben der Antenne 111 bis 114 mit der zweiten Sendefrequenz 2fs werden nach dem vorher Gesagten die Wandler Nr. 1 bis 3 und die Wandler Nr. 4 bis 6 einer jeden Gruppe 20 schaltungstechnisch zu einer Untergruppe 21 zusammengefasst. Die Wandler Nr. 1 bis 3 der Untergruppe 21 werden jetzt über die Leistungsverstärker 19 um jeweils 2 x 60° = 120° phasenverschoben gespeist. Ebenso werden die Wandler Nr. 4 bis 6 in der zweiten Untergruppe 21 der Gruppe 20 über die Leistungsverstärker 19 um 2 x 60° = 120° phasenverschoben gespeist, wie dies in Fig. 5 dargestellt ist.

In der Tabelle der Fig. 7 ist eine gleiche Darstellung wie in der Tabelle gemäß Fig. 6 für eine modifizierte Antenne mit zwölf Wandlern 13 pro parallelbetriebener Gruppe 20 dargestellt. Wie ohne weitere Erläuterung aus der Tabelle ersichtlich ist, ist bei dieser Wandlerzahl die Möglichkeit gegeben, die Antennen 111 bis 114 mit vier verschiedenen Sendefrequenzen, die sich um ein ganzzahliges Vielfaches unterscheiden, zu betreiben. Im Ausführungsbeispiel der Fig. 2 kann damit beispielhaft für jede Antenne 111 bis 114 eine andere Sendefrequenz gewählt werden. Auch ist es möglich, alle Antennen 111 bis 114 mit derselben Sendefrequenz zu betreiben und von den zur Verfügung stehenden Sendefrequenzen $f_S$, $2f_S$, $3f_S$, $4f_S$ eine auszuwählen, deren Frequenzband sich nicht mit einer parallel im Überwasserschiff betriebenen Sonaranlage überschneidet. Weiterhin ist es möglich, alle oder einzelne Antennen 111 bis 114 mit mehreren ausgewählten oder allen zur Verfügung stehenden Sendefrequenzen zu betreiben. Wie die Tabelle gemäß Fig. 7 zeigt, werden die zwölf Wandler 13 in den parallel betriebenen Gruppen 20 um jeweils 30° zueinander phasenverschoben mit der Frequenz $f_S$ gespeist. Zur Abstrahlung der Sendefrequenz $2f_S$ werden in jeder Wandlergruppe 20 zwei Untergruppen 21 zu je sechs Wandlern 13 gebildet, die in jeder Untergruppe 21 um 2 x 30° = 60° gegeneinander phasenverschoben gespeist werden. Zur Abstrahlung der Sendefrequenz $3f_S$ werden die insgesamt zwölf Wandler 13 jeder Wandlergruppe 20 schaltungstechnisch zu drei Untergruppen 21 mit jeweils vier Wandlern 13 zusammengefasst, wobei die Wandler 13 in jeder Untergruppe 21 um 3 x 30° = 90° gegeneinander phasenverschoben mit der Frequenz $3f_S$ gespeist werden. Zur Abstrahlung der Sendefrequenz $4f_S$ werden letztlich die Wandler 13 jeder Gruppe 20 zu vier Untergruppen 21 à drei Wandler 13 zusammengefasst, die gegeneinander um 4 x 30° = 120° phasenverschoben mit der Frequenz $4f_S$ gespeist werden. Wie leicht zu erkennen ist, ist die Vervielfachung der tiefsten Sendefrequenz $f_S$, mit der das Dopplerlog betrieben werden kann, von der Zahl der schaltungstechnisch gebildeten Untergruppen 21 bestimmt.

Das erfindungsgemäße Dopplerlog kann nicht nur zur Bestimmung der Eigengeschwindigkeit von Überwasserschiffen eingesetzt werden, sondern eignet sich insbesondere auch durch die kleine Abmessung der Antennenkonfiguration 11 gemäß Fig. 2 zum Einsatz in U-Booten und insbesondere in autonom operierenden oder ferngelenkten Unterwasserfahrzeugen, sog. Drohnen oder AUVs, respektive ROVs, die eine kleine Bauform besitzen. Für AUVs lässt sich der Durchmesser der Platte 18 auf ca. 100mm reduzieren. Selbstverständlich ist es möglich, die Platte 18 auch rechteckförmig auszubilden. Bei U-Booten und AUVs wird die Platte 18 ebenfalls am Boden des Fahrzeugkörpers befestigt, so dass die Platte 18 parallel zu einer von der Längs- und Querachse des Unterwasserfahrzeugs aufgespannten Ebene angeordnet ist. Um quer zur Hauptrichtung 12 der Antenne 111 bis 114 auftretende Nebenpegel zu unterdrücken oder weitgehend zu reduzieren, wird die Platte 18 mechanisch gekrümmt, so das sie eine Form ähnlich einem Hohlspiegel erhält. Die Krümmung ist so gewählt, dass für alle möglichen Sendefrequenzen eine optimale Reduzierung dieser Nebenpegel erzielt wird.

## Patentansprüche

1. Vorrichtung zur Bestimmung der Eigengeschwindigkeit eines Wasserfahrzeugs (10) durch Dopplermessung mit mindestens einer am Wasserfahrzeug (10) angeordneten Antenne (111 bis 114), die aus einer Vielzahl von äquidistant aneinandergereihten, elektroakustischen Wandlern (13) mit einer breitbandigen Sende- und Empfangscharakteristik besteht und durch phasenverschobene Ansteuerung der Wandler (13) eine um einen Winkel ($\alpha$) gegen die von der Fahrzeuglängs- und -querachse aufgespannte Ebene geneigte Hauptrichtung (12) zum Senden und Empfangen von Schallwellen aufweist, wobei die Gesamtzahl der Wandler (13) auf parallel betreibbare Gruppen (20) gleicher Wandlerzahl aufgeteilt ist, **dadurch gekennzeichnet, dass** die Gesamtzahl der Wandler (13) so gewählt ist, dass die Wandler (13) innerhalb der Gruppe (20) zu parallel betreibbaren Untergruppen (21) gleicher Wandlerzahl zusammenfassbar sind, und dass bei unveränderter Hauptrichtung (12) der Antenne (111 bis 114) wahlweise alle Wandler (13) in jeder der parallel betriebenen Gruppen (20) mit einer ersten Sendefrequenz ($f_S$) und denselben Phasenverschiebungen und/oder alle Wandler (13) in jeder der parallel betriebenen Untergruppen (21) mit mindestens einer einem ganzzahligen Vielfachen der ersten Sendefrequenz ($f_S$) entsprechenden zweiten Sendefrequenz und um dasselbe ganzzahlige Vielfache gegenüber den Phasenverschiebungen in den parallel betriebenen Gruppen (20) phasenverschoben angesteuert werden, wobei das Vielfache durch die Anzahl der parallelbetriebenen Untergruppen (21) in jeder Gruppe (20) bestimmt ist.

2. Vorrichtung nach Anspruch 1, **dadurch gekennzeichnet, dass** die erste Sendefrequenz ($f_S$) eine durch die Hauptrichtung (12) und den Wandlerabstand (d) vorgegebene tiefste Frequenz ist.

3. Vorrichtung nach Anspruch 1 oder 2, **dadurch gekennzeichnet, dass** gleichphasig angesteuerte Wandler (13) in den verschiedenen Gruppen (20) jeweils an einem gemeinsamen Leistungsverstärker (19) fest angeschlossen sind.

4. Vorrichtung nach einem der Ansprüche 1 bis 3, **dadurch gekennzeichnet, dass** die Wandler (13) aus einem Verbundwerkstoff mit einer Vielzahl von in einem Polymer (15) eingebetteten Keramikelementen (14) aus einer piezoelektrischen oder elektrostriktiven Keramik hergestellt sind, die stirnseitig von Elektroden (16, 17) kontaktiert sind.

5. Vorrichtung nach Anspruch 4, **dadurch gekennzeichnet,** **dass** die Antenne (111 bis 114) in einem Sektor einer Platte (18) aus Verbundwerkstoff ausgebildet ist und die die Keramikelemente (14) auf mindestens einer Stirnseite kontaktierenden Elektroden (16, 17) streifenförmig mit einer gegenüber der Streifenbreite größeren Streifenlänge ausgeführt und in Streifenbreite gesehen mit Spaltabstand aneinandergereiht sind, wobei die Streifenlänge rechtwinklig zu der Projektionslinie der gewünschten Hauptrichtung (12) der Antenne (111 bis 114) auf die Plattenebene ausgerichtet ist.

6. Vorrichtung nach Anspruch 5, **dadurch gekennzeichnet, dass** die Streifenlänge der in der Reihung aufeinanderfolgenden Elektroden (16, 17) ausgehend von der mittleren Elektrode (16, 17) bis hin zu den beiden äußeren Elektroden abnimmt.

7. Vorrichtung nach Anspruch 5 oder 6, **dadurch gekennzeichnet, dass** der Sektor in Richtung der Streifenlänge der Elektroden (16, 17) konkav gekrümmt ist.

8. Vorrichtung nach Anspruch 7, **dadurch gekennzeichnet, dass** die Krümmung des Sektors an den von den Sendefrequenzen überdeckten Frequenzbereich angepasst ist.

9. Vorrichtung nach einem der Ansprüche 5 bis 8, **dadurch gekennzeichnet, dass** auf der Platte (18) vier, jeweils eine Antenne (111 bis 114) bildende Sektoren vorgesehen sind, die um 90° Umfangswinkel gegeneinander versetzt sind.

10. Vorrichtung nach Anspruch 9 ,**dadurch gekennzeichnet, dass** die Platte (18) so am Fahrzeug (10) angeordnet ist, dass von den Hauptrichtungen (12) der von den Sektoren gebildeten Antennen (111 bis 114) eine nach Voraus, eine nach Achtern, eine nach Steuerbord und eine nach Backbord weist.

11. Vorrichtung nach einem der Ansprüche 5 bis 10, **dadurch gekennzeichnet, dass** auf der Platte (18) zwei, jeweils eine Antenne (111) bildende Sektoren vorgesehen sind, die um 90° Umfangswinkel gegeneinander gedreht sind.

## Claims

1. Apparatus for determining a water craft's (10) own speed by Doppler measurement with at least one antenna (111 to 114) which is arranged on the water craft (10), comprises a multiplicity of electroacoustic transducers (13) which are arranged in a row or rows at equal intervals and have a broadband transmission and reception characteristic, and, as a result of the transducers (13) being driven with a phase shift, has a main lobe direction (12), which is inclined through an angle ($\alpha$) with respect to the plane covered by the vehicle longitudinal axis and lateral axis, for the transmission and reception of sound waves, wherein the total number of transducers (13) being split into groups (20) which can be operated in parallel and have the same numbers of transducers, **characterized in that** the total number of transducers (13) is chosen such that the transducers (13) within the group (20) can be combined to form subgroups (21), which can be operated in parallel and have the same numbers of transducers, and such that, if the main lobe direction (12) of the antenna (111 to 114) is not changed, all the transducers (13) in each of the groups (20) which are operated in parallel are driven selectively at a first transmission frequency ($f_s$) and the same phase shifts and/or all the transducers (13) in each of the subgroups (21) which are operated in parallel are driven at at least one second transmission frequency, which corresponds to an integer multiple of the first transmission frequency ($f_s$), and being operated phase-shifted through the same integer multiple as the phase shifts in the groups (20) which are operated in parallel with the multiplication factor being determined by the number of subgroups (21) which are operated in parallel in each group (20).

2. Apparatus according to Claim 1, **characterized in that** the first transmission frequency ($f_s$) is a lowest frequency which is predetermined by the main lobe direction (12) and the transducer separation (d).

3. Apparatus according to Claim 1 or 2, **characterized in that** transducers (13) which are driven in phase in the various groups (20) are each permanently connected to a common power amplifier (19).

4. Apparatus according to one of Claims 1 to 3, **characterized in that** the transducers (13) are produced from a composite material with a multiplicity of ceramic elements (14), which are embedded in a polymer (15) and are composed of a piezoelectric or electrostrictive ceramic, with electrodes (16, 17) making contact with their end faces.

**5.** Apparatus according to Claim 4, **characterized in that** the antenna (111 to 114) is formed in a sector of a plate (18) composed of composite material, and the electrodes (16, 17) which make contact with the ceramic elements (14) on at least one end face are in the form of strips with a strip length which is greater than the strip width, and are arranged in a row or rows with a column separation, seen in the strip width, with the strip length being aligned at right angles to the projection line of the desired main lobe direction (12) of the antenna (111 to 114) on to the plate plane.

**6.** Apparatus according to Claim 5, **characterized in that** the strip length of the successive electrodes (16, 17) in the row decreases, starting from the central electrode (16, 17), toward the two outer electrodes.

**7.** Apparatus according to Claim 5 or 6, **characterized in that** the sector has concave curvature in the direction of the strip length of the electrodes (16, 17).

**8.** Apparatus according to Claim 7, **characterized in that** the curvature of the sector is matched to the frequency range covered by the transmission frequencies.

**9.** Apparatus according to one of Claims 5 to 8, **characterized in that** four sectors are provided on the plate (18), each form an antenna (111 to 114), and are offset through a circumferential angle of 90° with respect to one another.

**10.** Apparatus according to Claim 9, **characterized in that** the plate (18) is arranged on the vehicle (10) such that, of the main lobe directions (12) of the antennas (111 to 114) formed from the sectors, one points ahead, one astern, one to starboard and one to port.

**11.** Apparatus according to one of Claims 5 to 10, **characterized in that** two sectors are provided on the plate (18), each form an antenna (111), and are rotated through a circumferential angle of 90° with respect to one another.

## Revendications

**1.** Dispositif pour déterminer la vitesse propre d'un véhicule nautique (10) par mesure Doppler avec au moins une antenne (111 à 114) montée sur le véhicule nautique (10), laquelle se compose d'une pluralité de convertisseurs électroacoustiques (13) équidistants alignés l'un contre l'autre et ayant des caractéristiques d'émission et de réception à large bande et laquelle présente, par un commande à déphasage des convertisseurs (13), une direction principale (12) d'émission et de réception des ondes sonores qui est inclinée selon un angle ($\alpha$) par rapport au plan tracé par l'axe longitudinal et l'axe transversal du véhicule, le nombre total de convertisseurs (13) étant distribué en des groupes (20) pouvant fonctionner en parallèle et incluant le même nombre de convertisseurs, **caractérisé en ce que** le nombre total de convertisseurs (13) est choisi de telle sorte que les convertisseurs (13) à l'intérieur du groupe (20) peuvent être assemblés en sous-groupes (21) pouvant fonctionner en parallèle et incluant le même nombre de convertisseurs et qu'avec une direction principale (12) inchangée de l'antenne (111 à 114), tous les convertisseurs (13), au choix, dans chacun des groupes (20) fonctionnant en parallèle sont commandés avec une première fréquence d'émission ($f_s$) et les mêmes déphasages et/ou tous les convertisseurs (13) dans chacun des sous-groupes (21) fonctionnant en parallèle sont commandés avec au moins une deuxième fréquence d'émission correspondant à un multiple entier de la première fréquence d'émission ($f_s$) et sont déphasés du même multiple entier par rapport aux déphasages dans les groupes (20) fonctionnant en parallèle, le multiple étant déterminé par le nombre de sous-groupes (21) fonctionnant en parallèle dans chaque groupe (20).

**2.** Dispositif selon la revendication 1, **caractérisé en ce que** la première fréquence d'émission ($f_s$) est une fréquence basse prédéfinie par la direction principale (12) et l'écart entre les convertisseurs (d).

**3.** Dispositif selon la revendication 1 ou 2, **caractérisé en ce que** les convertisseurs (13) commandés avec la même phase dans les différents groupes (20) sont respectivement raccordés à demeure à un amplificateur de puissance (19) commun.

**4.** Dispositif selon l'une des revendications 1 à 3, **caractérisé en ce que** les convertisseurs (13) sont fabriqués dans un matériau composite incluant une pluralité d'éléments en céramique (14) noyés dans un polymère (15) et constitués d'une céramique piézoélectrique ou électrostrictive, lesquels sont en contact avec des électrodes (16, 17) par leur côté frontal.

5. Dispositif selon la revendication 4, **caractérisé en ce que** l'antenne (111 à 114) est réalisée dans un secteur d'une plaque (18) en matériau composite et les électrodes (16, 17) qui sont en contact avec les éléments en céramique (14) au moins par un côté frontal sont réalisées en forme de bandes dont la longueur de bande est plus grande que la largeur de bande et qui, vues dans la largeur de la bande, sont alignées l'une contre l'autre avec un espacement, la longueur de bande étant perpendiculaire à la ligne de projection de la direction principale (12) souhaitée de l'antenne (111 à 114) sur le plan de la plaque.

6. Dispositif selon la revendication 5, **caractérisé en ce que** la longueur de bande des électrodes (16, 17) qui se suivent dans l'alignement diminue à partir de l'électrode centrale (16, 17) jusqu'aux deux électrodes extérieures.

7. Dispositif selon la revendication 5 ou 6, **caractérisé en ce que** le secteur est de courbure concave en direction de la longueur de bande des électrodes (16, 17).

8. Dispositif selon la revendication 7, **caractérisé en ce que** la courbure du secteur est adaptée à la plage de fréquences couverte par les fréquences d'émission.

9. Dispositif selon l'une des revendications 5 à 8, **caractérisé en ce que** quatre secteurs formant respectivement une antenne (111 à 114) sont prévus sur la plaque (18), lesquels sont décalés mutuellement d'un angle inscrit de 90°.

10. Dispositif selon la revendication 9, **caractérisé en ce que** la plaque (18) est disposée sur le véhicule (10) de telle sorte que l'une des directions principales (12) des antennes (111 à 114) formées par les secteurs est dirigée vers l'avant, l'une vers l'arrière, l'une vers tribord et l'autre vers bâbord.

11. Dispositif selon l'une des revendications 5 à 10, **caractérisé en ce que** deux secteurs formant respectivement une antenne (111) sont disposés sur la plaque (18) et sont pivotés d'un angle inscrit de 90° l'un par rapport à l'autre.

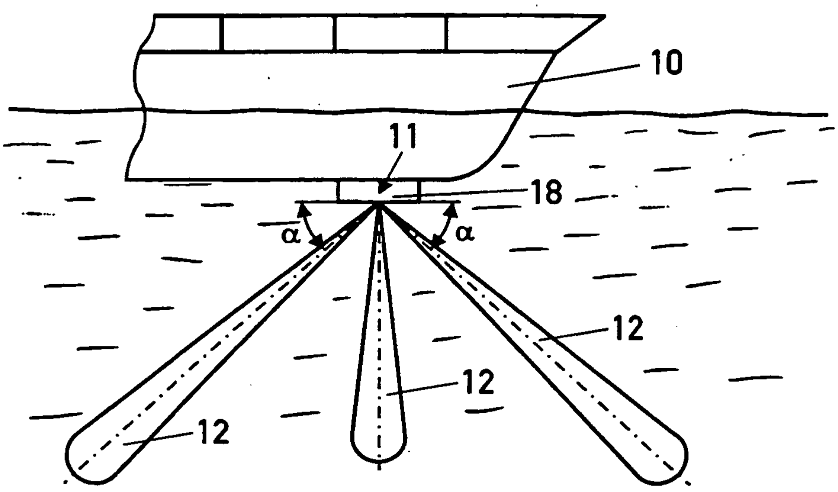


Fig. 1

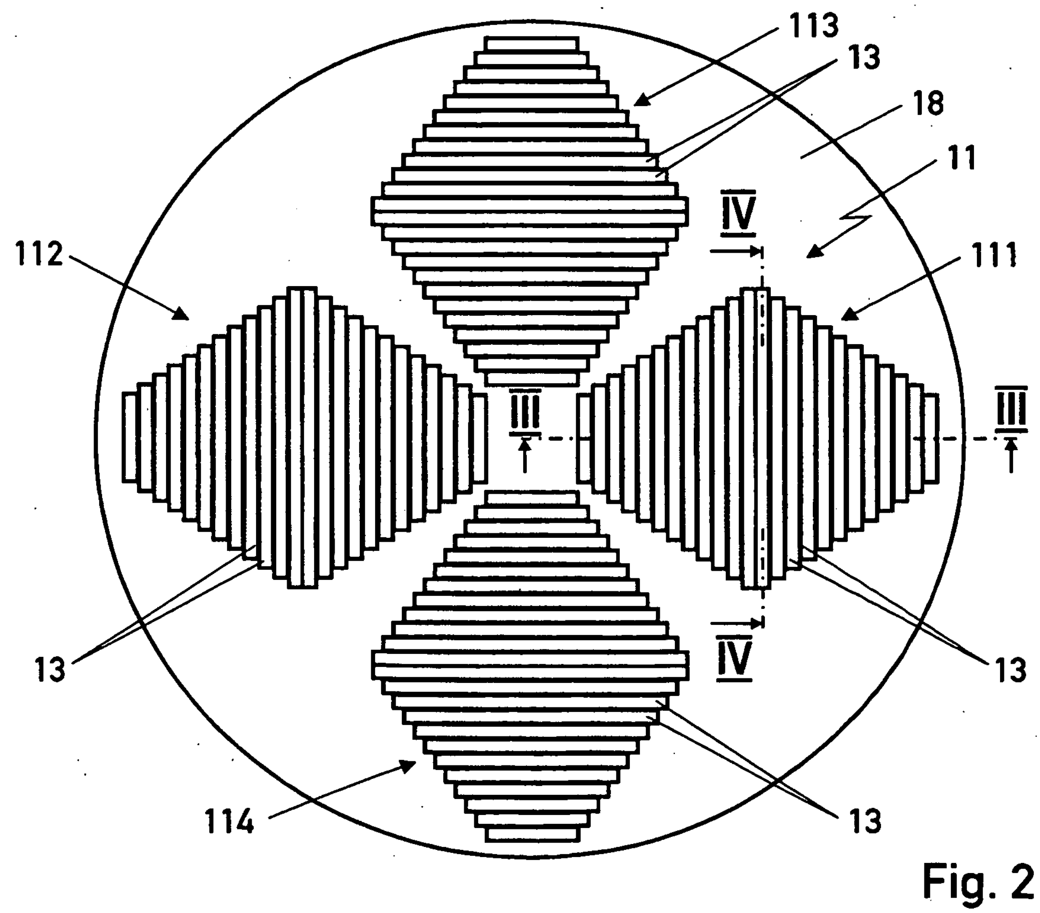


Fig. 2

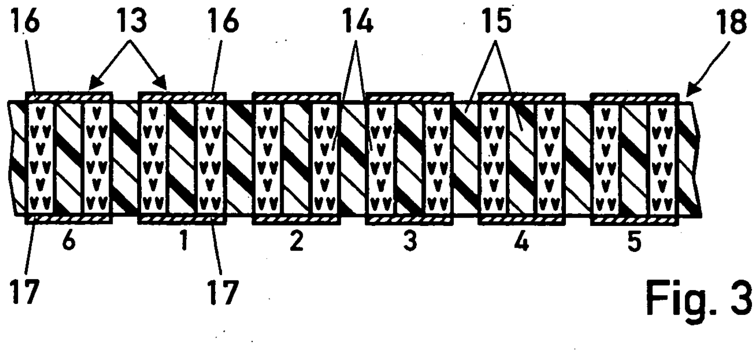


Fig. 3

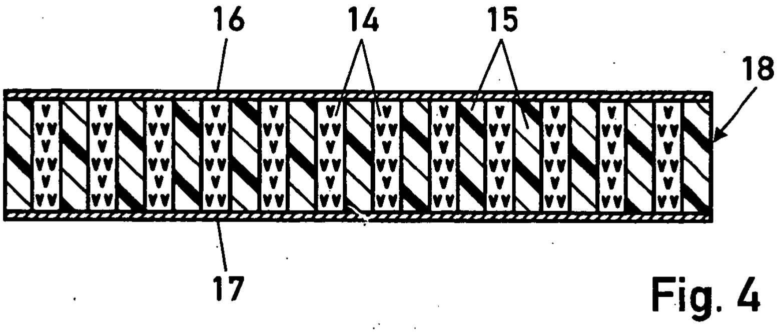


Fig. 4

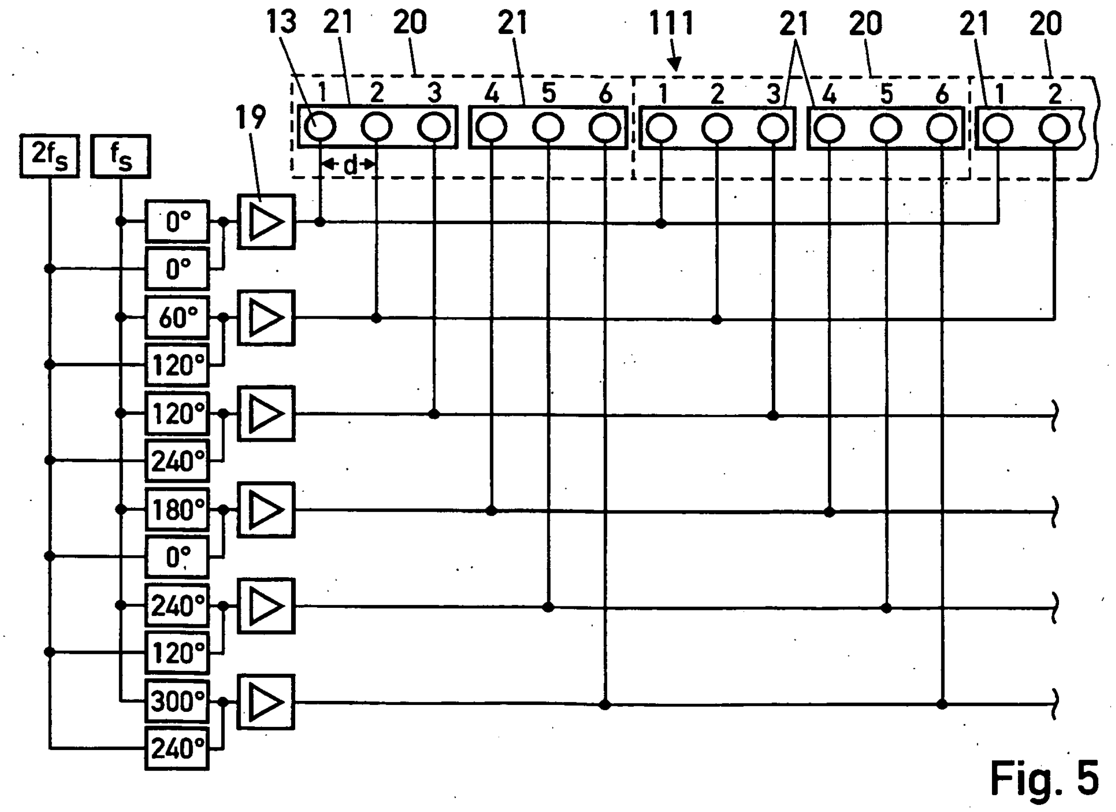


Fig. 5

| Anzahl der Untergruppen | Wandlerzahl pro Untergruppe | Sendefrequenz | Wandlerzahl pro Gruppe = 6<br>Phasenverschiebung an Wandler Nr. der Gruppe 1 | 2 | 3 | 4 | 5 | 6 |
|---|---|---|---|---|---|---|---|---|
| — | — | $f_S$ | 0° | 60° | 120° | 180° | 240° | 300° |
| 2 | 3 | $2f_S$ | 0° | 120° | 240° | 0° | 120° | 240° |

Fig. 6

| Anzahl der Untergruppen | Wandlerzahl pro Untergruppe | Sendefrequenz | Wandlerzahl pro Gruppe = 12<br>Phasenverschiebung an Wandler Nr. der Gruppe 1 | 2 | 3 | 4 | 5 | 6 | 7 | 8 | 9 | 10 | 11 | 12 |
|---|---|---|---|---|---|---|---|---|---|---|---|---|---|---|
| — | — | $f_S$ | 0° | 30° | 60° | 90° | 120° | 150° | 180° | 210° | 240° | 270° | 300° | 360° |
| 2 | 6 | $2f_S$ | 0° | 60° | 120° | 180° | 240° | 300° | 0° | 60° | 120° | 180° | 240° | 300° |
| 3 | 4 | $3f_S$ | 0° | 90° | 180° | 270° | 0° | 90° | 180° | 270° | 0° | 90° | 180° | 270° |
| 4 | 3 | $4f_S$ | 0° | 120° | 240° | 0° | 120° | 240° | 0° | 120° | 240° | 0° | 120° | 240° |

Fig. 7

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 1798276 C1
- US 5694372 A
- US 20030076742 A1
- DE 3021449 A1
- US 5950291 A